# EUROPEAN PATENT SPECIFICATION

(11) **EP 4 099 351 B1**
(45) Date of publication and mention of the grant of the patent: **18.03.2026**
(21) Application number: 21747496.4
(22) Date of filing: 25.01.2021
(51) Int. Cl.: H01G 11/12, H01G 11/76, H01G 11/78, H01G 11/82, H01M 10/613, H01M 10/625, H01M 10/647, H01M 10/6554, H01M 10/6556, H01M 10/6567, H01M 50/20, H01M 50/342, H01M 50/543, H01M 50/209, H01M 50/264, H01M 50/291, H01G 11/10, H01G 11/18

(54) **ELECTRICAL STORAGE MODULE**
ELEKTRISCHES SPEICHERMODUL
MODULE DE STOCKAGE ÉLECTRIQUE

(30) Priority: 31.01.2020 JP 2020014692
(43) Date of publication of application: 07.12.2022
(73) Proprietor: Panasonic Intellectual Property Management Co., Ltd., Osaka-shi, Osaka 540-6207 (JP)
(72) Inventor: SATO, Kasumi, Osaka-shi, Osaka 540-6207 (JP); NORIMINE, Shota, Osaka-shi, Osaka 540-6207 (JP); FUJITA, Goro, Osaka-shi, Osaka 540-6207 (JP); KOZUKI, Kiyomi, Osaka-shi, Osaka 540-6207 (JP); TAJIMA, Mitsutoshi, Osaka-shi, Osaka 540-6207 (JP)
(74) Representative: Novagraaf International SA
(86) International application number: PCT/JP2021/002511
(87) International publication number: WO 2021/153523

(56) References cited:
- EP-A1- 2 337 113
- EP-A1- 3 352 244
- WO-A1-2016/157267
- WO-A1-2018/012349
- WO-A1-2018/061894
- JP-A- 2006 286 547
- JP-A- 2013 175 464
- JP-A- 2019 169 270
- JP-A- 2019 169 270
- KR-A- 20120 048 280
- US-A1- 2011 159 348
- US-A1- 2012 115 004
- US-A1- 2018 138 473

## Description

### TECHNICAL FIELD

The present disclosure relates to a power storage module.

### BACKGROUND ART

As a power source required to have a high output voltage for a vehicle, for example, a power storage module including power storage devices (for example, batteries) connected in series is known. Regarding such a power storage module, for example, PTL 1 discloses a battery pack including batteries, a pair of end plates arranged at both ends in an arranging direction of the batteries, and a restraint member (binding bar) bridged between the pair of end plates to restrain the batteries in the arranging direction. In this battery pack, the battery has a shape having a width larger than a height, and the pair of restraint members sandwich the batteries in a height direction. The document WO2018/012349 discloses a battery module and the document JP 2019 169270 discloses a method for manufacturing a battery pack and a battery pack.

### Citation List

### Patent Literature

PTL 1: Japanese Patent Laid-Open Publication No. 2019-169270

### SUMMARY OF THE INVENTION

### Technical Problem

In a case where the battery having the width larger than the height, a structure in which the battery is sandwiched from the height direction rather than a width direction of the battery by the pair of restraint members can increase strength by enlarging the restraint members. However, an increase in size of the restraint member causes an increase in a mass of the power storage module.

The present disclosure has been conceived in view of such circumstances, and one of objects of the present disclosure is to provide a technique for reducing a weight of a restraint member provided in a power storage module.

### Solution to Problem

The present invention provides a power storage module according to claim 1. Embodiments of the invention are set forth with the appended dependent claims.

A power storage module according to an aspect of the present disclosure includes an array including power storage devices each having first and second surfaces opposite to each other in a first direction, a first restraint member facing the first surface of each power storage device, and a second restraint member facing the second surface of each power storage device. Dimensions of the power storage devices in a second direction perpendicular to the first direction are larger than respective dimensions of the power storage devices. The power storage devices are arranged in a third direction perpendicular to the first and second directions. The first restraint member extends in the third direction and restrains the array in the third direction. The second restraint member extends in the third direction and restrains the array in the third direction. At least one of the first and second restraint members has a hole therein. The hole is a recess falling in the first direction or a through-hole passing through the restraint member in the first direction.

### Advantageous Effect of Invention

According to the present disclosure, the weight of the restraint member provided in the power storage module can be reduced.

### BRIEF DESCRIPTION OF THE DRAWINGS

Fig. 1 is a perspective view of a power storage module according to Exemplary Embodiment 1.
Fig. 2 is an exploded perspective view of the power storage module.
Fig. 3 is a perspective view of a power storage device and a separator.
Fig. 4A is a perspective view of the separator and a second restraint member fitted to each other.
Fig. 4B is a cross-sectional view of the separator and the second restraint member fitted to each other.
Fig. 5 is a perspective view of a second restraint member included in a power storage module according to Exemplary Embodiment 2.
Fig. 6 is a perspective view of a separator and the second restraint member fitted to each other.
Fig. 7 is a perspective view of a second restraint member and a separator fitted to each other in a power storage module according to Modified Example 1.
Fig. 8 is a perspective view of a second restraint member of a power storage module according to Modified Example 2.
Fig. 9 is a perspective view of the second restraint member and the separator fitted to each other.
Fig. 10 is a perspective view of a second restraint member provided in a power storage module according to Modified Example 3.
Fig. 11 is a perspective view of the second restraint member and the separator fitted to each other.

### DESCRIPTION OF EMBODIMENT

The present disclosure will hereinafter be described on the basis of preferred exemplary embodiments, with reference to the drawings. The exemplary embodiments are not intended to limit the present disclosure but are illustrative, and all features described in the exemplary embodiments and combinations of the features are not necessarily essential to the present disclosure. The identical or equivalent configuration elements, members, and processing illustrated in the drawings are denoted by the identical reference marks, and repetitious description will be omitted when appropriate. The scale and the shape of each part illustrated in each drawing are set for the sake of convenience in order to facilitate the understanding of the description and should not be interpreted in a limited manner unless otherwise specified. In cases where terms such as "first" and "second" are used in the present description or claims, these terms do not represent any order or importance but are intended to distinguish one configuration from another configuration, unless otherwise specified. From each of the drawings, some of members not important for describing the exemplary embodiments are omitted.

### Exemplary Embodiment 1

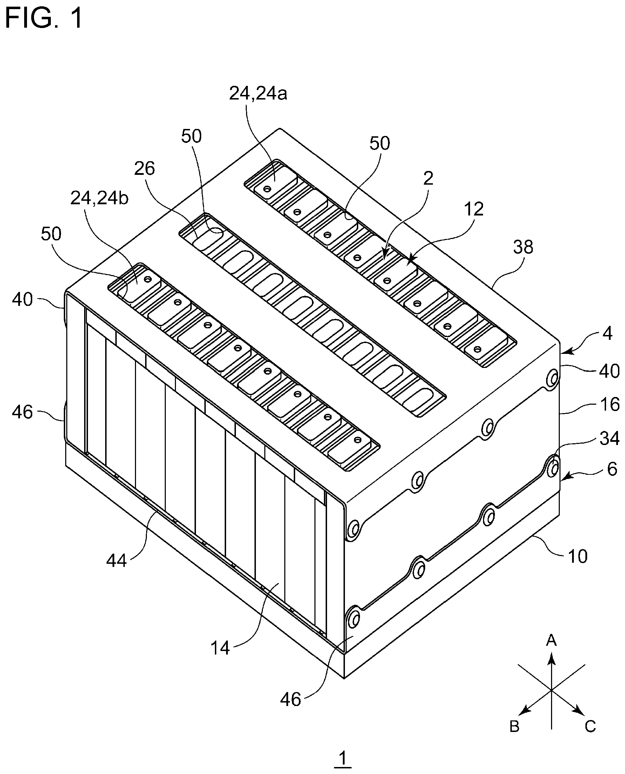

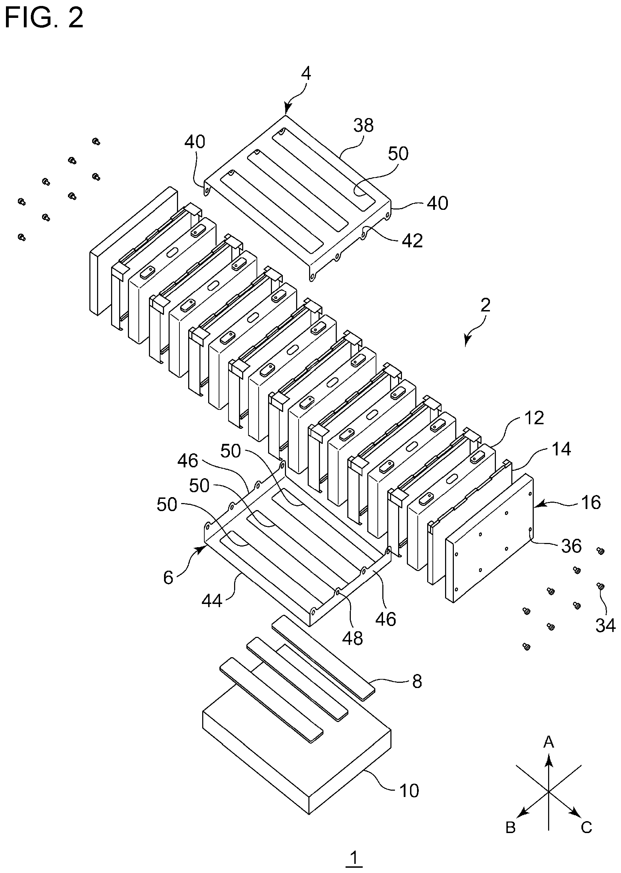

Fig. 1 is a perspective view of a power storage module according to Exemplary Embodiment 1. Fig. 2 is an exploded perspective view of the power storage module. Power storage module 1 includes array 2, first restraint member 4, second restraint member 6, heat conductive members 8, and cooling plate 10.

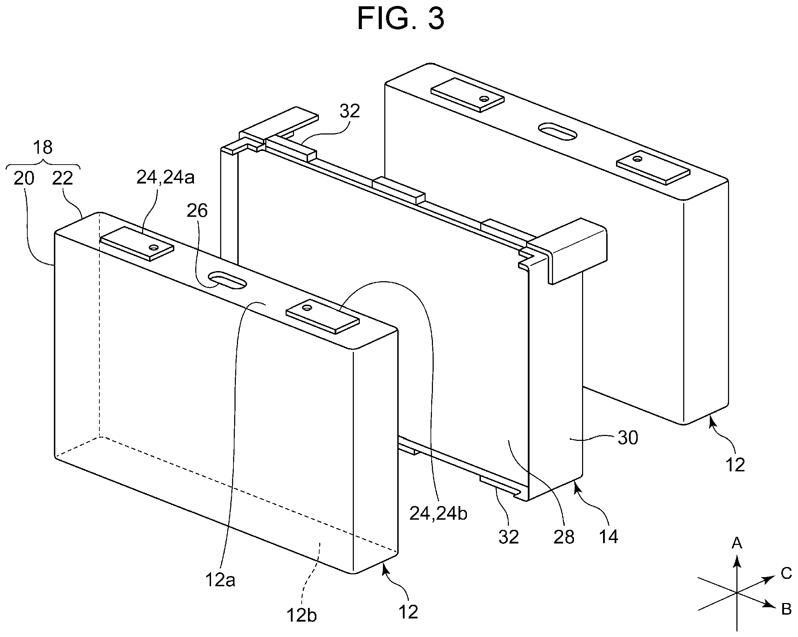

Array 2 includes power storage devices 12, separators 14, and a pair of end plates 16. Fig. 3 is a perspective view of power storage devices 12 and separator 14.

Each power storage device 12 is, for example, a rechargeable secondary battery, such as a lithium ion battery, a nickel-hydrogen battery, or a nickel-cadmium battery, or a capacitor, such as an electric double layer capacitor. Power storage device 12 according to the present embodiment is a so-called prismatic battery, and includes housing 18 having a flat rectangular-parallelepiped shape. Housing 18 includes exterior can 20 and sealing plate 22.

Exterior can 20 has a substantially rectangular opening in one surface thereof. An electrode assembly, an electrolyte, and the like are accommodated exterior can 20 through the opening. Exterior can 20 has a bottom surface opposite to the opening and four side surfaces connecting the opening to the bottom surface. Two of the four side surfaces of the exterior can are a pair of long side surfaces connected to two opposing long sides of the opening. Each of the long side surfaces is a main surface having the largest area among the surfaces of exterior can 20. The remaining two side surfaces of the can other than the two long side surfaces are a pair of short side surfaces connected to short sides of the opening of exterior can 20.

Exterior can 20 may be covered with an insulating film (not illustrated) such as a shrink tube. The insulating film covering a surface of exterior can 20 prevents short-circuiting between adjacent power storage devices 12. This configuration also prevents short-circuiting between power storage device 12 and end plate 16 and between first restraint member 4 and second restraint member 6. Sealing plate 22 sealing exterior can 20 by closing the opening is fit in the opening of exterior can 20. Exterior can 20 and sealing plate 22 are conductors made of metal, such as aluminum, iron, or stainless steel. Exterior can 20 and sealing plate 22 are joined together by, for example, laser welding, friction stir bonding, brazing, and the like. Alternatively, exterior can 20 and sealing plate 22 may be made of resin with an insulating property.

A pair of output terminals 24 are disposed on sealing plate 22. Specifically, positive-electrode terminal 24a is provided near one end of sealing plate 22 in a longitudinal direction and negative-electrode terminal 24b near the other end. In a case where it is unnecessary to distinguish polarities of the pair of output terminals 24 from each other, positive-electrode terminal 24a and negative-electrode terminal 24b are collectively referred to as output terminals 24.

Sealing plate 22 on which the pair of output terminals 24 are arranged constitutes first surface 12a of power storage device 12. The bottom surface of exterior can 20 constitutes second surface 12b of power storage device 12. First surface 12a and second surface 12b are opposite to each other. In the description of the present exemplary embodiment, for the sake of convenience, first surface 12a side of power storage device 12 is defined as an upper side in a vertical direction, and second surface 12b side of power storage device 12 is defined as a lower side in the vertical direction. The long side surfaces and the short side surfaces of exterior can 20 are defined as long side surfaces and short side surfaces of power storage device 12, respectively. In array 2, a surface on first surface 12a side of power storage device 12 is defined as an upper surface of array 2, a surface on second surface 12b side of power storage device 12 is defined as a lower surface of array 2, and surfaces on the short side surface side of power storage device 12 are defined as side surfaces of array 2. The pair of output terminals 24 may not necessarily disposed on first surface 12a. For example, the pair of output terminals 24 may be disposed on a short side surface of power storage device 12.

These directions and positions are defined for the sake of convenience. Therefore, for example, a portion defined as the upper surface in the present disclosure does not mean being always positioned above a portion defined as the lower surface. Therefore, first surface 12a is not necessarily positioned above second surface 12b. Hereinafter, a direction in which first surface 12a and second surface 12b are arranged is referred to as first direction A, a direction in which the pair of output terminals 24 are arranged is referred to as second direction B, and a direction in which the plurality of power storage devices 12 are arranged (stacked) is referred to as third direction C. First direction A, second direction B, and third direction C are perpendicular to one another.

Power storage device 12 includes valve 26 provided on first surface 12a. Valve 26 is disposed on sealing plate 22 between the pair of output terminals 24. Valve 26 is configured to open to release an internal gas of housing 18 when an internal pressure of housing 18 rises to a predetermined value or higher. For example, valve 26 is made of a thin part of sealing plate 22 having a thickness locally smaller than a thickness of another part of sealing plate 22, and a groove formed in a surface of the thin part. In this configuration, when the internal pressure of housing 18 rises, valve 26 opens such that the thin part starts to tear from the groove.

The plurality of power storage devices 12 are arranged at predetermined intervals in third direction C such that the long side surfaces of adjacent power storage devices 12 face each other. Power storage devices 12 are arranged such that first surfaces 12a face the same direction. Two adjacent power storage devices 12 are arranged such that positive-electrode terminal 24a of one power storage device 12 is adjacent to negative-electrode terminal 24b of another power storage device 12. Positive-electrode terminal 24a and negative-electrode terminal 24b are connected in series with a bus bar (not illustrated). Alternatively, output terminals 24 of power storage devices 12 having the same polarity adjacent to each other may be connected in parallel with bus bars to form power storage device blocks, and these power storage device blocks may be connected in series to one another.

Separator 14, which is referred to also as an insulating spacer, is arranged between the long side surfaces of two adjacent power storage devices 12 facing each other so as to electrically insulate two power storage devices 12 from each other. Separator 14 is made of, for example, a resin having an insulating property. Examples of the resin constituting separator 14 include thermoplastic resins, such as polypropylene (PP), polybutylene terephthalate (PBT), polycarbonate (PC), and Noryl (registered trademark) resin (modified PPE). Power storage devices 12 and separators 14 are stacked alternately on one another. Separator 14 is also disposed between power storage device 12 and end plate 16. This configuration insulates power storage device 12 from end plate 16.

Separator 14 includes main body 28, wall 30, and plural protrusions 32. Main body 28 has a flat plate shape and is disposed between the long side surfaces of two adjacent power storage devices 12. Wall 30 extends in third direction C from two side edges of main body 28 arranged in second direction B and mainly covers the short side surfaces of power storage device 12. Some of protrusions 32 protrude upward from an upper end of main body 28, and remaining protrusions 32 protrude downward from a lower end of main body 28. A structure of protrusion 32 will be detailed later. In the present exemplary embodiment, main body 28, wall 30, and plural protrusions 32 are integrally molded.

The pair of end plates 16 are arranged at both ends of power storage devices 12 in third direction C. Power storage devices 12 and separators 14 provided side by side are sandwiched between the pair of end plates 16 in third direction C. End plate 16 is made of, for example, a metal sheet or a resin sheet. End plate 16 has screw holes 36 therein into which screws 34 as fixing members are screwed.

First restraint member 4 and second restraint member 6 are also called binding bars. First restraint member 4 and second restraint member 6 face each other in first direction A. First restraint member 4 faces first surface 12a of each power storage device 12 and extends in third direction C. Second restraint member 6 faces second surface 12b of each power storage device 12 and extends in third direction C. Array 2 is disposed between first restraint member 4 and second restraint member 6.

First restraint member 4 includes first main body 38 and a pair of first arms 40. First main body 38 has a rectangular plate shape extending in third direction C. First main body 38 extends in parallel to first surface 12a of each power storage device 12. A contour of first main body 38 substantially coincides with a contour of an upper surface of array 2 when viewed in first direction A. The pair of first arms 40 extend from both ends of first main body 38 toward second restraint member 6 in third direction C. The pair of first arms 40 face each other in third direction C. Each first arm 40 has through-holes 42 through which screws 34 are inserted.

Second restraint member 6 includes second main body 44 and a pair of second arms 46. Second main body 44 has a rectangular plate shape extending in third direction C. Second main body 44 extends in parallel to second surface 12b of each power storage device 12. A contour of second main body 44 substantially coincides with a contour of a lower surface of array 2 when viewed in first direction A. The pair of second arms 46 extend from both ends of second main body 44 toward first restraint member 4 in third direction C. The pair of second arms 46 face each other in third direction C. Each second arm 46 has through-holes 48 therein through which screws 34 are inserted.

At least one of first restraint member 4 and second restraint member 6 is made of a single plate. In accordance with the embodiment, both of first restraint member 4 and second restraint member 6 are made of single plates. The main body and the pair of arms may be formed by, for example, bending both ends of a metal sheet. In this case, a portion from this bending position to a distal end corresponds to the arm, and the remaining part corresponds to the main body. Alternatively, the restraint member may be made of a resin as long as predetermined or higher rigidity can be obtained. At least one of first restraint member 4 and second restraint member 6 may be divided into plural portions.

Power storage module 1 is assembled, for example, as follows. That is, power storage devices 12 and separators 14 are arranged alternately to be sandwiched between the pair of end plates 16 in third direction C, thereby forming array 2. Array 2 is sandwiched between first restraint member 4 and second restraint member 6 in first direction A. First restraint member 4 is positioned such that through-holes 42 overlap screw holes 36 of end plate 16. Second restraint member 6 is positioned such that through-holes 48 overlap screw holes 36 of end plate 16. In this state, screws 34 are inserted through through-holes 42 and 48 and are screwed into screw holes 36.

First restraint member 4 and second restraint member 6 are connected to the pair of end plates 16, and thus, array 2 is restrained in third direction C by first restraint member 4 and second restraint member 6. Each power storage device 12 is positioned in third direction C by first restraint member 4 and second restraint member 6 by being fastened along third direction C. First arm 40 and second arm 46 and end plates 16 may be fixed to one another by, e.g., welding. Surfaces of first restraint member 4 and second restraint member 6 facing array 2 may be covered with insulating sheets (not illustrated).

As an example, after this positioning is completed, bus bars are attached to output terminals 24 of power storage devices 12 such that output terminals 24 of power storage devices 12 are electrically connected to each other. For example, the bus bars are fixed to output terminals 24 by welding. The upper surface of array 2 is covered with a cover member (not illustrated). The cover member prevents condensed water, dust, and the like from contacting output terminals 24, the bus bars, and valve 26. The cover member is made of a resin having an insulating property, for example, and can be fixed to the upper surface of array 2 by a well-known fixing structure (not illustrated) including screws and a well-known locking mechanism.

First restraint member 4 and second restraint member 6 have holes 50 therein. Holes 50 of the present exemplary embodiment are through-holes passing through the main body of each restraint member in first direction A. Holes 50 may be recesses falling in first direction A. First restraint member 4 has holes 50, accordingly reducing the weight of first restraint member 4. Second restraint member 6 has holes 50 therein, accordingly reducing the weight of second restraint member 6.

First restraint member 4 of the present exemplary embodiment has three holes 50 therein extending in third direction C in which power storage devices 12 are arranged and overlapping power storage devices 12. Each hole 50 overlaps all power storage devices 12 constituting array 2. Each hole 50 may overlap only some of power storage devices 12. Three holes 50 are arranged at predetermined intervals in second direction B. Holes 50 at both ends overlap output terminals 24 of power storage devices 12 when viewed in first direction A. Hole 50 at a center overlaps valve 26 of each power storage device 12 when viewed in first direction A. Accordingly, output terminal 24 and valve 26 of each power storage device 12 are exposed to the outside. The number of holes 50 is not limited and may be one or more.

Second restraint member 6 of the present exemplary embodiment has three holes 50 extending in third direction C and overlapping the plurality of power storage devices 12. Each hole 50 overlaps all power storage devices 12 constituting array 2. Each hole 50 may overlap only some of power storage devices 12. Three holes 50 are arranged at predetermined intervals in second direction B. Heat conductive member 8 is fitted into each hole 50.

Heat conductive member 8 is accommodated in hole 50 and heat-exchangeably contacts second surface 12b of each power storage device 12. For example, heat conductive member 8 directly contacts second surface 12b. Heat conductive member 8 is made of a material having thermal conductivity higher than air. Heat conductive member 8 preferably has an insulating property. Heat conductive member 8 preferably has flexibility. As heat conductive member 8, a known resin sheet or the like having good heat transfer property, such as acrylic rubber or silicone rubber, may be used.

Cooling plate 10 is configured to cool power storage devices 12. Cooling plate 10 is made of a material, such as aluminum, having high heat transfer property. Array 2 is placed on a main surface of cooling plate 10 with second restraint member 6 interposed therebetween while a bottom surface of the cooling plate, that is, second restraint member 6 side faces cooling plate 10. In this state, cooling plate 10 heat-exchangeably contacts heat conductive member 8. For example, heat conductive member 8 directly contacts cooling plate 10. Each power storage device 12 is cooled by heat exchange with cooling plate 10 across heat conductive member 8 interposed therebetween. Second restraint member 6 may also heat-exchangeably contacts cooling plate 10. In this case, heat of each power storage device 12 may be exchanged with cooling plate 10 across heat conductive member 8 and second restraint member 6 interposed therebetween. A refrigerant pipe (not illustrated) through which a refrigerant, such as water or ethylene glycol, flows may be provided in cooling plate 10.

Heat conductive member 8 is preferably elastically deformable by being sandwiched between array 2 and cooling plate 10, and fills a gap between second surface 12b of each power storage device 12 and cooling plate 10, thereby enhancing the cooling efficiency of each power storage device 12 accordingly.

As described above, each separator 14 includes protrusions 32 protruding upward and downward. Each separator 14 has three protrusions 32 on upper and lower sides. Three protrusions 32 protruding upward are arranged so as to overlap three holes 50 of first restraint member 4 when viewed in first direction A, and are fitted into holes 50. Three protrusions 32 protruding downward are arranged so as to overlap three holes 50 of second restraint member 6 when viewed in first direction A, and are fitted into holes 50.

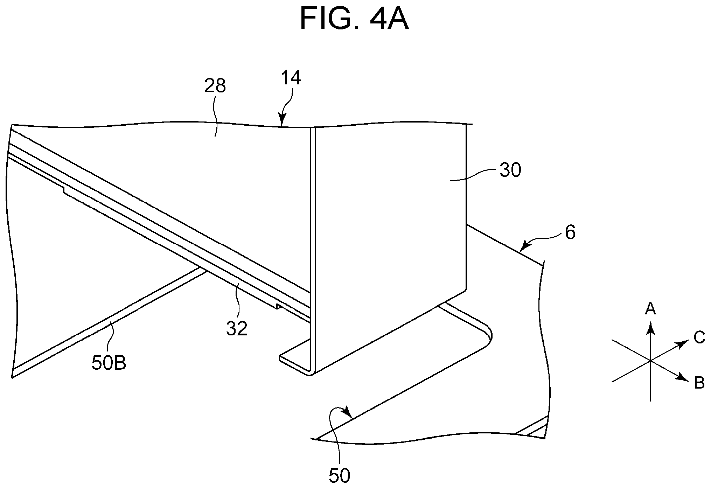

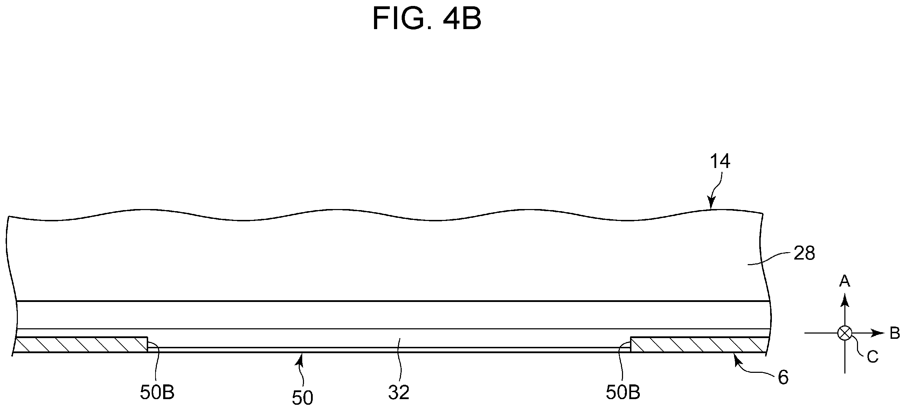

Fig. 4A is a perspective view of separator 14 and second restraint member 6 fitted to each other. Fig. 4B is a cross-sectional view of separator 14 and second restraint member 6 fitted to each other. Although Figs. 4A and 4B illustrate second restraint member 6 and separator 14 fitted to each other, the same applies to the fitting between first restraint member 4 and separator 14. The illustration of second arm 46 is omitted in Fig. 4A.

When the protrusion is inserted into hole 50, protrusion 32 is brought into contact with two inner side surfaces 50B opposing each other in second direction B among inner side surfaces of hole 50. A dimension of protrusion 32 in second direction B is substantially equal to a distance between two inner side surfaces 50B, and protrusion 32 inserted into hole 50 is sandwiched between two inner side surfaces 50B in second direction B.

As described above, power storage module 1 according to the present exemplary embodiment includes array 2, first restraint member 4, and second restraint member 6. Array 2 includes power storage devices 12 arranged. Each power storage device 12 has first surface 12a and second surface 12b opposite first surface 12a. A dimension of power storage device 12 in second direction B perpendicular to first direction A is larger than a dimension of power storage device 12 in first direction A in which first surface 12a and second surface 12b are arranged. Power storage devices 12 are arranged in third direction C perpendicular to first direction A and second direction B. First restraint member 4 faces first surface 12a of each power storage device 12, extends in third direction C, and restrains array 2 in third direction C. Second restraint member 6 faces second surface 12b of each power storage device 12, extends in third direction C, and restrains array 2 in third direction C. Each of first restraint member 4 and second restraint member 6 has a hole 50. Hole 50 is a recess falling in first direction A or a through-hole passing through the restraint member in first direction A.

When array 2 of power storage device 12 which is larger in second direction B than in first direction A is sandwiched between the pair of restraint members, array 2 is sandwiched along first direction A, and thus, an area of a cross section of each restraint member perpendicular to third direction C may increase as compared with a case where the array is sandwiched along second direction B. Accordingly, the strength of the restraint member increases with respect to force in third direction C generated by the expansion of each power storage device 12. End plate 16 of the present exemplary embodiment is made of a plate with a dimension in second direction B is longer than a dimension thereof in first direction A in accordance with a shape of power storage device 12. End plate 16 is also sandwiched along first direction A by first restraint member 4 and second restraint member 6. Accordingly, a distance from a center point of end plate 16 along viewed from third direction C to an end of end plate 16 to which the restraint member of end plate 16 is connected may be shorter than a case where the pair of restraint members sandwiches end plate 16 along second direction B. Thus, end plate 16 is hardly bent. This configuration addresses the amount of expansion of each power storage device 12 that increases with an increase in a capacity of each power storage device 12.

However, an increase in size of each restraint member increases a mass of power storage module 1. On the other hand, a weight of each restraint member is reduced by providing holes 50 in first restraint member 4 and second restraint member 6, and the increase in the mass of power storage module 1 can be suppressed. At least one of first restraint member 4 and second restraint member 6 with hole 50 reduces the weight of the restraint member having hole 50, and furthermore, reduces the weight of power storage module 1.

Power storage device 12 of the present exemplary embodiment includes a pair of output terminals 24 on first surface 12a. In array 2, power storage devices 12 are arranged such that first surfaces 12a face the same direction. Power storage device 12 of the present exemplary embodiment has valve 26 on first surface 12a. First restraint member 4 has hole 50 which is a through-hole. Hole 50 overlaps output terminal 24 and valve 26 of each power storage device 12 when viewed in first direction A. Hole 50 overlaps output terminal 24, and thus, prevents first restraint member 4 from hindering a connection work between output terminal 24 and the bus bar. Since at least a part of a connection structure of output terminal 24 and the bus bar is accommodated in hole 50, power storage module 1 can be downsized. Hole 50 overlaps valve 26, and prevents first restraint member 4 from hindering the exhaust from valve 26. Hole 50 may overlap only one of output terminal 24 or valve 26.

Second restraint member 6 of the present exemplary embodiment has hole 50 which is a through-hole. Power storage module 1 includes heat conductive member 8 which is accommodated in hole 50. Conductive member 8 heat-exchangeably contacts second surface 12b of each power storage device 12. The upper surface and the lower surface of array 2 are wider than the side surface of array 2. Thus, in a case where the upper surface of array 2 is covered with first restraint member 4 and the lower surface of array 2 is covered with second restraint member 6, it is difficult to thermally connect power storage devices 12 equally to the restraint members due to a positional displacement between power storage devices 12 or the like. Thus, it is difficult to equalize degrees of heat dissipation to the restraint members of power storage devices 12. On the other hand, heat conductive member 8 are arranged in the through-hole as hole 50 provided in second restraint member 6, each power storage device 12 heat-exchangeably contacts heat conductive member 8, thereby suppressing variations in cooling efficiency among the power storage devices 12. The cooling efficiency of each power storage device 12 is enhanced by the through-hole as hole 50 in first restraint member 4.

Power storage module 1 of the present exemplary embodiment includes cooling plate 10 on which array 2 is placed with second restraint member 6 interposed therebetween and which heat-exchangeably contacts heat conductive member 8. This configuration further increases the cooling efficiency of each power storage device 12. Each power storage device 12 may be thermally connected to cooling plate 10 with only heat conductive member 8 fitted in hole 50 interposed therebetween without interposing the restraint member. On the other hand, the restraint member with no hole 50 requires the heat conductive member between the restraint member and cooling plate 10 in order to cool each power storage device 12 by cooling plate 10 while suppressing the variations in cooling for each power storage device 12. Accordingly, a stacked structure of the heat conductive member and the restraint member is interposed between array 2 and cooling plate 10. Thus, according to the present exemplary embodiment, the number of interfaces between the members interposed between power storage devices 12 and cooling plate 10 can be reduced as compared with a case where the restraint member having no hole 50 is interposed between power storage devices 12 and cooling plate 10. From this point, the cooling efficiency of each power storage device 12 can also be enhanced. Since an internal space of hole 50 can be used as an accommodation space of the heat conductive member, power storage module 1 can be downsized.

Array 2 of the present exemplary embodiment includes one or more separators 14. Each of one or more separators 14 is arranged between respective one pair of two adjacent power storage devices 12 to insulate two power storage devices 12 from each other. Separator 14 has protrusion 32 fitted to hole 50. Accordingly, a relative displacement between separator 14 and at least one of first restraint member 4 and second restraint member 6 can be restricted. Accordingly, the displacement of each power storage device 12 can be restricted, and the vibration resistance of power storage module 1 can be improved.

Hole 50 of the present exemplary embodiment extends in third direction C and overlaps the plurality of power storage devices 12. Accordingly, since the number of holes 50 can be reduced, first restraint member 4 and second restraint member 6 may be manufactured easily. Protrusion 32 contacts two inner side surfaces 50B of hole 50 facing each other in second direction B among inner side surfaces of hole 50. This configuration restricts the displacement of separator 14 in second direction B and the displacement of power storage device 12. The displacement of each separator 14 in third direction C is allowed. Therefore, in a case where power storage devices 12 repeat expansion and contraction in association with charge and discharge or the like, separators 14 may be displaced in third direction C following the expansion and contraction. Accordingly, breakage and deformation of separator 14 can be suppressed.

At least one of first restraint member 4 and second restraint member 6 is made of a single plate, accordingly, suppressing an increase in the number of components of power storage module 1, and enhancing flatness of the main body. It is easy to obtain higher rigidity when the restraint member is made of a single plate than when the restraint member is divided. The restraint member made of the single plate may restrain end plate 16 while the restraint member overlaps an intermediate portion of end plate 16 in second direction B. This configuration further suppresses the bending of end plate 16 caused by the expansion of power storage device 12. Power storage module 1 of the present disclosure may include separator 14 having protrusion 32 fitted to hole 50 of the restraint member and heat conductive member 8 accommodated in the same hole 50. Heat conductive member 8 may be arranged so as to fill a space between hole 50 and protrusion 32. This configuration allows hole 50 to be used as both an arrangement space of an alignment structure of each power storage device 12 and an arrangement space of the cooling structure, consequently reducing the size of power storage module 1.

### Exemplary Embodiment 2

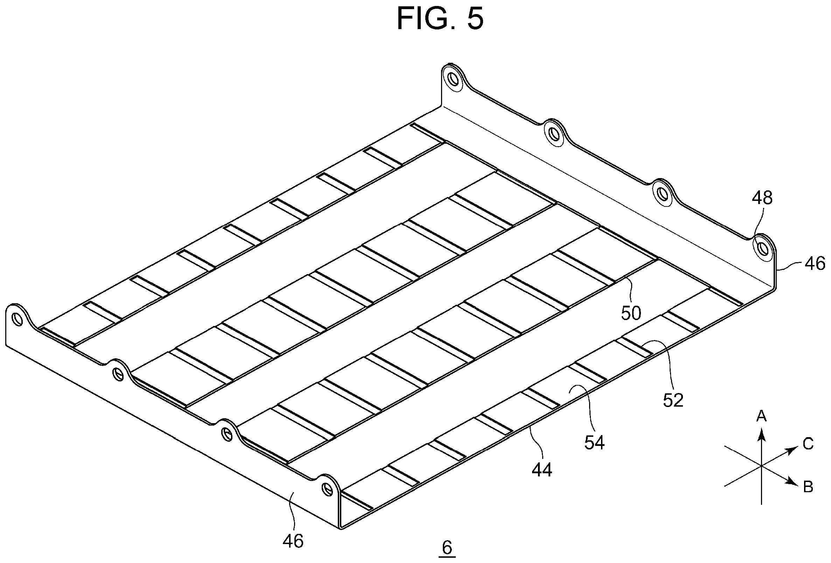

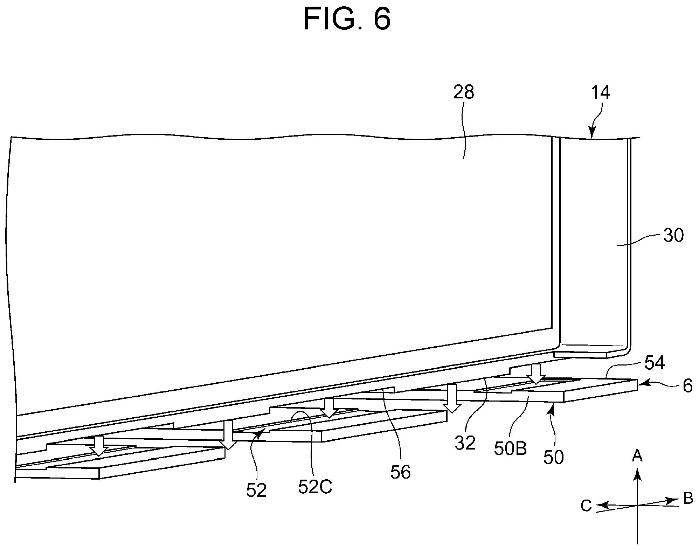

Exemplary Embodiment 2 has a configuration common to Embodiment 1 except for the shapes of first restraint member 4 and second restraint member 6 and the shape of separator 14. The present exemplary embodiment will be described with focusing on configurations different from those of Embodiment 1, and the same configurations will be briefly described or not described. Fig. 5 is a perspective view of second restraint member 6 of power storage module 1 according to Embodiment 2. Fig. 6 is a perspective view of separator 14 and second restraint member 6 fitted to each other. Since first restraint member 4 has the same structure as that of second restraint member 6, the illustration and description thereof are omitted.

Second restraint member 6 includes second main body 44, a pair of second arms 46, hole 50, and plural cutouts 52. Hole 50 extends in third direction C and overlaps power storage devices 12. Second restraint member 6 of the embodiment has three holes 50 therein arranged at predetermined intervals in second direction B. Each hole 50 is a through-hole passing through second main body 44 in first direction A. Holes 50 may be recesses falling in first direction A. The number of holes 50 is not limited, and may be one or more.

Each of cutouts 52 is arranged corresponding to respective one of one or more separators 14 in one-to-one correspondence. In second restraint member 6 of the present exemplary embodiment, although cutouts 52 are arranged so as to correspond to all separators 14 in one-to-one correspondence, the present invention is not limited thereto, and each of cutouts 52 may be provided corresponding to respective one of at least some of separators 14. Each cutout 52 is provided in a surface of strip-shaped remaining part 54 of second main body 44 excluding hole 50, and the surface faces array 2 side. Each cutout 52 is a recess falling in first direction A from the surface. Each cutout 52 extends from one end of remaining part 54 side to the other end of remaining part 54 side in second direction B. Therefore, each cutout 52 is connected to hole 50.

Each cutout 52 is a groove slenderly extending in second direction B, and has two inner side surfaces 52C facing each other in third direction C. A width of each cutout 52 in third direction C, that is, an interval between two inner side surfaces 52C is equal to or less than a dimension of power storage device 12 in third direction C. For example, each cutout 52 is arranged so as to overlap a center of main body 28 of each separator 14 in third direction C when viewed in first direction A. For example, each cutout 52 is arranged such that the center of each cutout 52 in third direction C overlaps the center of main body 28 in third direction C when viewed in first direction A.

Each separator 14 has protrusion 32 fitted to hole 50. Protrusion 32 contacts two inner side surfaces 50B of hole 50 facing each other in second direction B among inner side surfaces of hole 50. Each separator 14 includes fitting part 56 to be fitted to cutout 52. Fitting part 56 contacts two inner side surfaces 52C of cutout 52 facing each other in third direction C. A dimension of fitting part 56 in third direction C is substantially equal to a distance between the two inner side surfaces 52C, and fitting part 56 inserted into cutout 52 is sandwiched between two inner side surfaces 52C in third direction C. A surface of fitting part 56 facing first direction A contacts a surface of cutout 52 facing first direction A.

Fitting part 56 and protrusion 32 are arranged in second direction B, and is formed of a recess having a lower protruding height than protrusion 32, that is, recessed toward a center of main body 28 compared with protrusion 32. Fitting part 56 is fitted into cutout 52 and is sandwiched between two inner side surfaces 52C, and thus, restricts the displacement of each power storage device 12 in third direction C. The displacement of each power storage device 12 in first direction A may be restricted by fitting part 56 contacting the surfaces of cutout 52 facing first direction A. At least one of first restraint member 4 and second restraint member 6 may have cutout 52 therein.

Examples of power storage module 1 according to the present exemplary embodiment includes the following first to Modified Examples 1 to 3.

### Modified Example 1

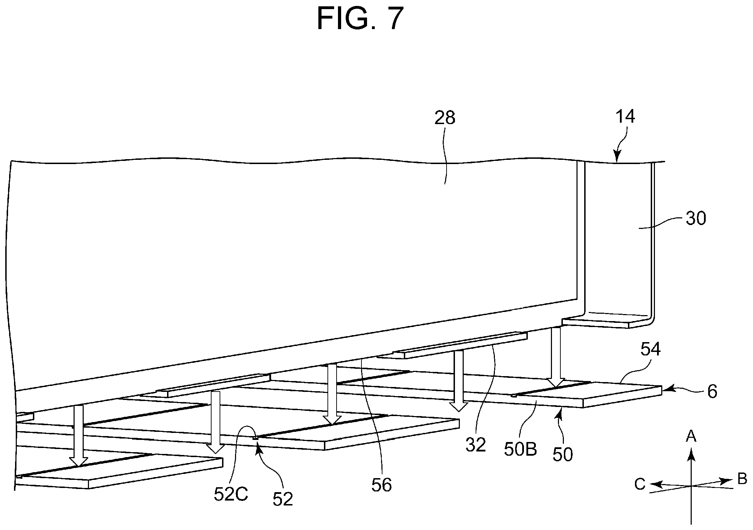

Fig. 7 is a perspective view of separator 14 and second restraint member 6 provided in power storage module 1 according to Modified Example 1 fitted to each other. A dimension of protrusion 32 of the present modified example in third direction C is larger than a dimension of fitting part 56 in third direction C. Therefore, protrusion 32 protrudes from fitting part 56 in third direction C. This configuration increases a contact area between protrusion 32 and inner side surface 50B while protrusion 32 is fitted to hole 50. As a result, the rotation of each power storage device 12 about an axis extending in first direction A is suppressed.

A dimension of fitting part 56 of the present modified example in third direction C is smaller than a dimension of fitting part 56 of Embodiment 2 in third direction C. For example, the dimension of fitting part 56 in third direction C is substantially equal to a thickness of main body 28. Therefore, each cutout 52 is thinner than cutout 52 of Embodiment 2. This configuration enhances the strength of second restraint member 6.

### Modified Example 2

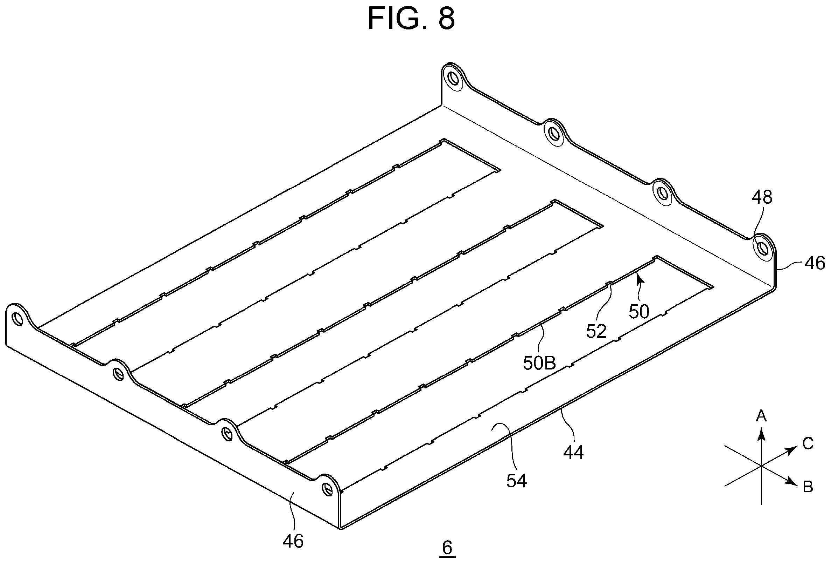

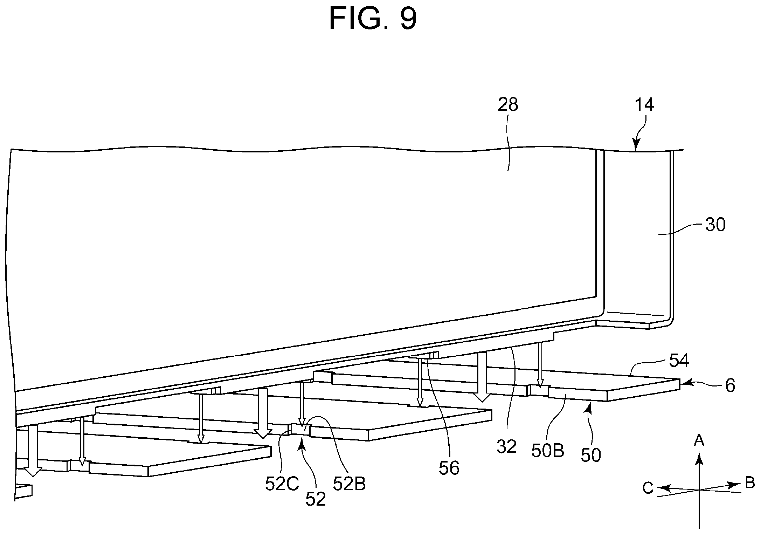

Fig. 8 is a perspective view of second restraint member 6 of power storage module 1 according to Modified Example 2. Fig. 9 is a perspective view of second restraint member 6 and separator 14 fitted to each other. Cutouts 52 of the present modified example are provided in two inner side surfaces 50B of hole 50 facing each other in second direction B. Cutout 52 is a recess falling from inner side surface 50B in second direction B. Cutout 52 passes through remaining part 54 in first direction A. Fitting part 56 protrudes in second direction B from a side surface of protrusion 32 facing second direction B. A dimension of fitting part 56 in third direction C is smaller than a dimension of the side surface in third direction C. The dimension of fitting part 56 in third direction C may be the same as the dimension of the side surface in third direction C.

When protrusion 32 is fitted into hole 50, a side surface of protrusion 32 facing second direction B contacts inner side surface 50B of hole 50. When protrusion 32 is fitted into hole 50, fitting part 56 is fitted into cutout 52. In this state, fitting part 56 is sandwiched between two inner side surfaces 52C of cutout 52 facing each other in third direction C. A side surface of fitting part 56 facing second direction B contacts inner side surface 52B of cutout 52 facing second direction B. Therefore, fitting part 56 according to the present modified example restricts the displacement of each power storage device 12 in second direction B and third direction C. According to the present modified example, hole 50 and cutout 52 may be simultaneously formed by punching the plate material constituting second main body 44.

### Modified Example 3

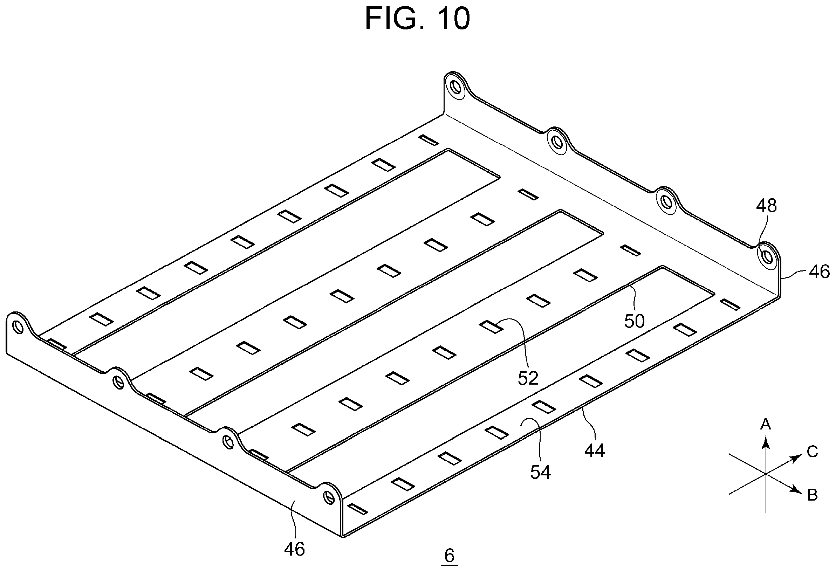

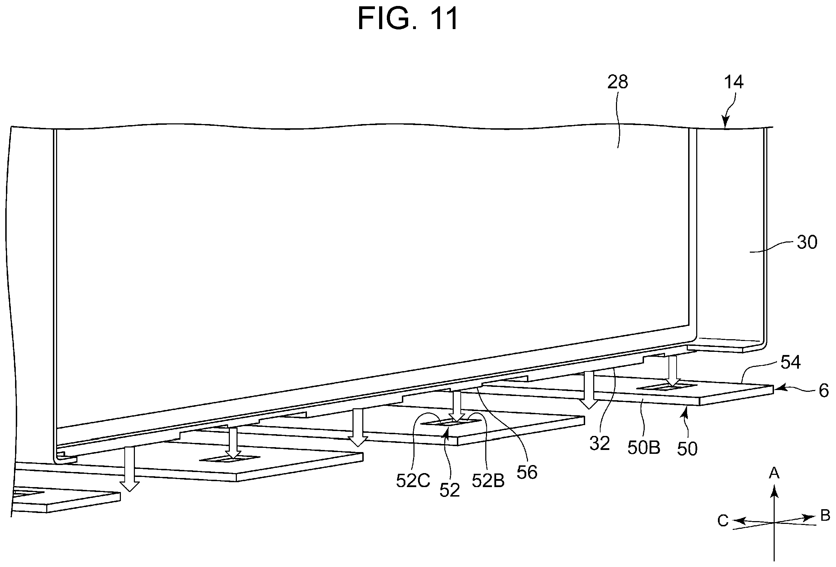

Fig. 10 is a perspective view of second restraint member 6 of power storage module 1 according to Modified Example 3. Fig. 11 is a perspective view of second restraint member 6 and separator 14 fitted to each other. Cutout 52 of the present modified example is provided in the surface of remaining part 54 facing array 2 side. Each cutout 52 is a recess falling from the surface in first direction A. Each cutout 52 has a rectangular shape when viewed in first direction A and is not connected to hole 50. Fitting part 56 is a protrusion that is arranged with protrusion 32 in second direction B and protrudes downward. Fitting part 56 has a rectangular shape when viewed in first direction A. The protruding height of fitting part 56 is lower than the protruding height of protrusion 32.

When protrusion 32 is fitted into hole 50, a side surface of protrusion 32 facing second direction B contacts inner side surface 50B of hole 50. When protrusion 32 is fitted into hole 50, fitting part 56 is fitted into cutout 52. In this state, fitting part 56 is sandwiched between two inner side surfaces 52C of cutout 52 facing each other in third direction C. Fitting part 56 is sandwiched between two inner side surfaces 52B of cutout 52 facing each other in second direction B. The surface of fitting part 56 facing first direction A contacts the surface of cutout 52 facing first direction A. According to the present modified example, fitting part 56 restricts the displacement of each power storage device 12 in first direction A, second direction B, and third direction C.

The exemplary embodiments of the present disclosure have been detailed above. The above-described exemplary embodiments are merely specific examples for implementing the present disclosure, which is defined by the appended claims.

Hatching applied to the cross section in the drawing does not limit the material of the object to which the hatching has been applied.

### Other Modified Examples

At least one of first restraint member 4 and second restraint member 6 may have plural holes 50 therein. Each of holes 50 is arranged corresponding to respective one of power storage devices 12 in one-to-one correspondence. That is, the restraint member may have a structure in which holes 50 overlapping only one power storage device 12 in first direction A are arranged in third direction C. Accordingly, the strength of the restraint member can be enhanced as compared with a case where hole 50 extending in third direction C is provided. Although holes 50 are preferably arranged corresponding to all power storage devices 12 in one-to-one correspondence, the present invention is not limited thereto, and holes 50 may be provided for some of power storage devices 12.

### REFERENCE MARKS IN THE DRAWINGS

- 1: power storage module
- 2: array
- 4: first restraint member
- 6: second restraint member
- 8: heat conductive member
- 10: cooling plate
- 12: power storage device
- 14: separator
- 24: output terminal
- 26: valve
- 32: protrusion
- 50: hole
- 52: cutout
- 56: fitting part

## Claims

1. A power storage module (1) comprising:
an array (2) including a plurality of power storage devices (12), each of plurality of power storage devices (12) having a first surface and a second surface opposite to the first surface, the first surface and the second surface being arranged in a first direction (A), respective dimensions of the plurality of power storage devices (12) in a second direction (B) perpendicular to the first direction (A) being larger than respective dimensions of the plurality of power storage devices (12) in the first direction (A), the plurality of power storage devices (12) being stacked in a third direction (C) perpendicular to the first direction (A) and the second direction (B);
a first restraint member (4) facing the first surface of each of the plurality of power storage devices (12), extending in the third direction (C), and restraining the array (2) in the third direction (C); and
a second restraint member (6) facing the second surface of each of the plurality of power storage devices (12), extending in the third direction (C), and restraining the array (2) in the third direction (C), wherein
at least one of the first restraint member (4) and the second restraint member (6) has a hole (50) therein, the hole (50) being a recess falling in the first direction (A) or a through-hole passing through the at least one of the first restraint member (4) and the second restraint member (6) in the first direction (A),
the second restraint member (6) has the hole (50) which is the through-hole, and
the power storage module (1) further comprises a heat conductive member (8) accommodated in the hole (50) and heat-exchangeably contacting the second surface.

2. The power storage module (1) according to claim 1, wherein
each of the plurality of power storage devices (12) includes a pair of output terminals (24) provided on the first surface, and
the plurality of power storage devices (12) are arranged in the array (2) such that the first surface of each of the plurality of power storage devices (12) faces a same direction.

3. The power storage module (1) according to claim 2, wherein
each of the plurality of power storage devices (12) further includes a valve (26) provided on the first surface,
the first restraint member (4) has the hole (50) which is the through-hole, and
the hole (50) overlaps the output terminals (24) or the valve (26) when viewed in the first direction (A).

4. The power storage module (1) according to any one of claims 1 to 3, further comprising a cooling plate (10) heat-exchangeably contacting the heat conductive member (8) accommodated in the hole (50), wherein
the array (2) is placed on the cooling plate (10) via the second restraint member (6) interposed between the array (2) and the cooling plate (10).

5. The power storage module (1) according to any one of claims 1 to 4, wherein
the array (2) further includes one or more separators (14) provided between respective one pair of one or more pairs of two adjacent power storage devices (12) out of the plurality of power storage devices (12), the one or more separators (14) insulating the respective one pair of the one or more pairs of the two adjacent power storage devices (12) from each other, and
each of the one or more separators (14) includes a protrusion (32) fitted into the hole (50).

6. The power storage module (1) according to claim 5, wherein
the hole (50) extends in the third direction (C) and overlaps the plurality of power storage devices (12), and
the protrusion (32) contacts two inner side surfaces out of inner side surfaces of the hole (50), two inner side surfaces facing each other in the second direction (B).

7. The power storage module (1) according to claim 5 or 6, wherein
at least one of the first restraint member (4) and the second restraint member (6) has one or more cutouts (52) therein, each of the one or more cutouts (52) being arranged corresponding to respective one of the one or more separators (14), each of the one or more cutouts (52) having two inner side surfaces facing each other in the third direction (C), and
the respective one of the one or more separators (14) includes a fitting part (56) contacting the two inner side surfaces of each of the plurality of cutouts (52).

8. The power storage module (1) according to any one of claims 1 to 5, wherein each of the plurality of holes (50) of the at least one of the first restraint member (4) and the second restraint member (6) is arranged corresponding to respective one of the plurality of power storage devices (12).

9. The power storage module (1) according to any one of claims 1 to 8, wherein at least one of the first restraint member (4) and the second restraint member (6) is made of a single plate.

## Patentansprüche

1. Energiespeichermodul (1), umfassend:
ein Array (2), das eine Vielzahl von Energiespeichervorrichtungen (12) umfasst, wobei jede der Vielzahl von Energiespeichervorrichtungen (12) eine erste Oberfläche und eine zweite Oberfläche umfasst, die der ersten Oberfläche entgegengesetzt ist, wobei die erste Oberfläche und die zweite Oberfläche in einer ersten Richtung (A) angeordnet sind, wobei jeweilige Abmessungen der Vielzahl von Energiespeichervorrichtungen (12) in einer zweiten Richtung (B) senkrecht zur ersten Richtung (A) größer als jeweilige Abmessungen der Vielzahl von Energiespeichervorrichtungen (12) in der ersten Richtung (A) sind, wobei die Vielzahl von Energiespeichervorrichtungen (12) in einer dritten Richtung (C) senkrecht zur ersten Richtung (A) und zur zweiten Richtung (B) gestapelt sind;
ein erstes Einschränkungselement (4), das der ersten Oberfläche jeder der Vielzahl von Energiespeichervorrichtungen (12) zugewandt ist, sich in der dritten Richtung (C) erstreckt und das Array (2) in der dritten Richtung (C) einschränkt; und
ein zweites Einschränkungselement (6), das der zweiten Oberfläche jeder der Vielzahl von Energiespeichervorrichtungen (12) zugewandt ist, sich in der dritten Richtung (C) erstreckt und das Array (2) in der dritten Richtung (C) einschränkt, wobei
mindestens eines von dem ersten Einschränkungselement (4) und dem zweiten Einschränkungselement (6) ein Loch (50) darin aufweist, wobei das Loch (50) eine Vertiefung, die in der ersten Richtung (A) abfällt, oder ein Durchgangsloch ist, welches das mindestens eine von dem ersten Einschränkungselement (4) und dem zweiten Einschränkungselement (6) in der ersten Richtung (A) durchquert,
das zweite Einschränkungselement (6) das Loch (50) aufweist, welches das Durchgangsloch ist, und
das Energiespeichermodul (1) ferner ein wärmeleitfähiges Element (8) umfasst, das in dem Loch (50) untergebracht ist und die zweite Oberfläche wärmeaustauschbar berührt.

2. Energiespeichermodul (1) nach Anspruch 1, wobei
jede der Vielzahl von Energiespeichervorrichtungen (12) ein Paar Ausgangsanschlüsse (24) umfasst, die auf der ersten Oberfläche bereitgestellt sind, und
die Vielzahl von Energiespeichervorrichtungen (12) derart in dem Array (2) angeordnet sind, dass die erste Oberfläche von jeder der Vielzahl von Energiespeichervorrichtungen (12) einer gleichen Richtung zugewandt ist.

3. Energiespeichermodul (1) nach Anspruch 2, wobei
jede der Vielzahl von Energiespeichervorrichtungen (12) ferner ein Ventil (26) umfasst, das auf der ersten Oberfläche bereitgestellt ist,
das erste Einschränkungselement (4) das Loch (50) aufweist, welches das Durchgangsloch ist, und
das Loch (50), aus der ersten Richtung (A) betrachtet, die Ausgangsanschlüsse (24) oder das Ventil (26) überlappt.

4. Energiespeichermodul (1) nach einem der Ansprüche 1 bis 3, ferner umfassend eine Kühlplatte (10), die das wärmeleitfähige Element (8), das in dem Loch (50) untergebracht ist, wärmeaustauschbar berührt, wobei
das Array (2) über das zweite Einschränkungselement (6), das zwischen dem Array (2) und der Kühlplatte (10) angeordnet ist, an der Kühlplatte (10) platziert ist.

5. Energiespeichermodul (1) nach einem der Ansprüche 1 bis 4, wobei
das Array (2) ferner einen oder mehrere Separatoren (14) umfasst, der bzw. die zwischen einem jeweiligen Paar von einem oder mehreren Paaren aus zwei benachbarten Energiespeichervorrichtungen (12) von der Vielzahl von Energiespeichervorrichtungen (12) bereitgestellt ist bzw. sind, wobei der eine oder die mehreren Separatoren (14) das jeweilige eine Paar von dem einen oder den mehreren Paaren aus den zwei benachbarten Energiespeichervorrichtungen (12) voneinander isoliert bzw. isolieren, und
jeder von dem einen oder den mehreren Separatoren (14) einen Vorsprung (32) umfasst, der in das Loch (50) eingepasst ist.

6. Energiespeichermodul (1) nach Anspruch 5, wobei
das Loch (50) sich in der dritten Richtung (C) erstreckt und die Vielzahl von Energiespeichervorrichtungen (12) überlappt, und
der Vorsprung (32) zwei innere Seitenoberflächen von den inneren Seitenoberflächen des Lochs (50) berührt, wobei zwei innere Seitenoberflächen einander in der zweiten Richtung (B) zugewandt sind.

7. Energiespeichermodul (1) nach Anspruch 5 oder 6, wobei
das mindestens eine von dem ersten Einschränkungselement (4) und dem zweiten Einschränkungselement (6) einen oder mehrere Ausschnitte (52) darin aufweist, wobei jeder von dem einen oder den mehreren Ausschnitten (52) einem jeweiligen von dem einen oder den mehreren Separatoren (14) entsprechend angeordnet ist, wobei jeder von dem einen oder den mehreren Ausschnitten (52) zwei innere Seitenoberflächen aufweist, die einander in der dritten Richtung (C) zugewandt sind, und
der jeweilige eine von dem einen oder den mehreren Separatoren (14) einen Einpassungsteil (56) umfasst, der die zwei inneren Seitenoberflächen von jedem der Vielzahl von Ausschnitten (52) berührt.

8. Energiespeichermodul (1) nach einem der Ansprüche 1 bis 5, wobei
jedes der Vielzahl von Löchern (50) des mindestens einen von dem ersten Einschränkungselement (4) und dem zweiten Einschränkungselement (6) der entsprechenden einen der Vielzahl von Energiespeichervorrichtungen (12) entsprechend angeordnet ist.

9. Energiespeichermodul (1) nach einem der Ansprüche 1 bis 8, wobei mindestens eines von dem ersten Einschränkungselement (4) und dem zweiten Einschränkungselement (6) aus einer einzigen Platte besteht.

## Revendications

1. Module de stockage d'énergie (1) comprenant :
un réseau (2) comprenant une pluralité de dispositifs de stockage d'énergie (12), chacun de la pluralité de stockage d'énergie (12) ayant une première surface et une seconde surface opposée à la première surface, la première surface et la seconde surface étant agencées dans une première direction (A), les dimensions respectives de la pluralité de dispositifs de stockage d'énergie (12) dans une deuxième direction (B) perpendiculaire à la première direction (A) étant supérieures aux dimensions respectives de la pluralité de dispositifs de stockage d'énergie (12) dans la première direction (A), la pluralité de dispositifs de stockage d'énergie (12) étant empilés dans une troisième direction (C) perpendiculaire à la première direction (A) et à la deuxième direction (B) ;
un premier élément de retenue (4) faisant face à la première surface de chacun de la pluralité de dispositifs de stockage d'énergie (12), s'étendant dans la troisième direction (C) et retenant le réseau (2) dans la troisième direction (C) ; et
un second élément de retenue (6) faisant face à la seconde surface de chacun de la pluralité de dispositifs de stockage d'énergie (12), s'étendant dans la troisième direction (C) et retenant le réseau (2) dans la troisième direction (C), dans lequel :
au moins l'un parmi le premier élément de retenue (4) et le second élément de retenue (6) a un trou (50) dans ce dernier, le trou (50) étant un évidement tombant dans la première direction (A) ou un trou débouchant passant par le au moins un parmi le premier élément de retenue (4) et le second élément de retenue (6) dans la première direction (A),
le second élément de retenue (6) a le trou (50) qui est le trou débouchant, et
le module de stockage d'énergie (1) comprend en outre un élément conducteur de chaleur (8) logé dans le trou (50) et en contact, par échange thermique, avec la seconde surface.

2. Module de stockage d'énergie (1) selon la revendication 1, dans lequel :
chacun de la pluralité de dispositifs de stockage d'énergie (12) comprend une paire de bornes de sortie (24) prévues sur la première surface, et
la pluralité de dispositifs de stockage d'énergie (12) sont agencés dans le réseau (2) de sorte que la première surface de chacun de la pluralité de dispositifs de stockage d'énergie (12) est orientée dans une même direction.

3. Module de stockage d'énergie (1) selon la revendication 2, dans lequel :
chacun de la pluralité de dispositifs de stockage d'énergie (12) comprend en outre une valve (26) prévue sur la première surface,
le premier élément de retenue (4) a le trou (50) qui est le trou débouchant, et
le trou (50) recouvre les bornes de sortie (24) ou la valve (26), lorsqu'il est observé dans la première direction (A).

4. Module de stockage d'énergie (1) selon l'une quelconque des revendications 1 à 3, comprenant en outre une plaque de refroidissement (10) en contact, par échange thermique, avec l'élément conducteur de chaleur (8) logé dans le trou (50), dans lequel :
le réseau (2) est placé sur la plaque de refroidissement (10) via le second élément de retenue (6) intercalé entre le réseau (2) et la plaque de refroidissement (10).

5. Module de stockage d'énergie (1) selon l'une quelconque des revendications 1 à 4, dans lequel :
le réseau (2) comprend en outre un ou plusieurs séparateurs (14) prévus entre une paire respective des une ou plusieurs paires de deux dispositifs de stockage d'énergie (12) adjacents parmi la pluralité de dispositifs de stockage d'énergie (12), les un ou plusieurs séparateurs (14) isolant la une paire respective des une ou plusieurs paires de deux dispositifs de stockage d'énergie (12) adjacents l'un par rapport à l'autre, et
chacun des un ou plusieurs séparateurs (14) comprend une saillie (32) montée dans le trou (50).

6. Module de stockage d'énergie (1) selon la revendication 5, dans lequel :
le trou (50) s'étend dans la troisième direction (C) et recouvre la pluralité de dispositifs de stockage d'énergie (12), et
la saillie (32) est en contact avec deux surfaces latérales internes parmi les surfaces latérales internes du trou (50), deux surfaces latérales internes se faisant face dans la deuxième direction (B).

7. Module de stockage d'énergie (1) selon la revendication 5 ou 6, dans lequel :
au moins l'un parmi le premier élément de retenue (4) et le second élément de retenue (6) a une ou plusieurs découpes (52) dans ce dernier, chacune des une ou plusieurs découpes (52) étant agencée en correspondance d'un séparateur respectif des un ou plusieurs séparateurs (14), chacune des une ou plusieurs découpes (52) ayant deux surfaces latérales internes se faisant face dans la troisième direction (C), et
le séparateur respectif des un ou plusieurs séparateurs (14) comprend une partie de montage (56) en contact avec les deux surfaces latérales internes de chacune de la pluralité de découpes (52).

8. Module de stockage d'énergie (1) selon l'une quelconque des revendications 1 à 5, dans lequel :
chacun de la pluralité de trous (50) du au moins un parmi le premier élément de retenue (4) et le second élément de retenue (6) est agencé en correspondance avec un dispositif respectif de la pluralité de dispositifs de stockage d'énergie (12).

9. Module de stockage d'énergie (1) selon l'une quelconque des revendications 1 à 8, dans lequel au moins l'un parmi le premier élément de retenue (4) et le second élément de retenue (6) est réalisé à partir d'une seule plaque.
